# EUROPEAN PATENT APPLICATION

(11) **EP 4 586 004 A1**
(43) Date of publication of application: **16.07.2025**
(21) Application number: 23863058.6
(22) Date of filing: 30.08.2023
(51) Int. Cl.: G02F 1/19, C08L 101/14

(54) **LIGHT CONTROL GLASS**

(30) Priority: 06.09.2022 JP 2022141748
(71) Applicant: International Frontier Technology Laboratory, Inc., Tokyo 105-0001 (JP)
(72) Inventor: KOMATSU, Nobuaki, Tokyo 105-0001 (JP); ITO, Tomoko, Tokyo 105-0001 (JP); WAKABAYASHI, Machiko, Tokyo 105-0001 (JP)
(74) Representative: Ter Meer Steinmeister & Partner
(86) International application number: PCT/JP2023/031597
(87) International publication number: WO 2024/053520

(57) **Abstract**

Disclosed herein is a light control glass that can be produced through a simple process and can offer stable performance. The light control glass includes transparent substrates facing each other and a light control material disposed between the transparent substrates, the light control material being a mixture of a temperature-responsive polymer (PNIPAM) having a lower critical solution temperature and a material (thermoreversible gelation polymer: TGP) that turns into a gel at a temperature equal to or lower than the lower critical solution temperature. In addition, FTO or ITO may be disposed on the surfaces of the transparent substrates being in contact with TGP.

## Description

### Technical Field

The present invention relates to a light control glass.

### Background Art

The entry of sunlight into architectural structures such as houses and buildings through windows increases the indoor temperature of offices and the like, which increases power consumption for air conditioning. Therefore, in the recent construction industry, automatic outside light shielding or outside light dimming control has been becoming an important index for evaluating architectural structures. Particularly, architectural structures using glass curtain walls have recently been increasing, and therefore light shielding/light control of glass outer walls covering a large area is an important technical issue.

A glass having such a light shielding/light control function is also called a smart glass. Demand for such glasses having a light shielding/light control function has been increasing for use not only as outer walls of architectural structures but also as windows, doors, and partitions in architectural structures and for use in automobiles and railway vehicles.

There are three relatively-well known techniques for light shielding/light control: ECW (Electro Chromic Window), LCW (Liquid Crystal Window), and SPD (Suspended Particle Device), but all of them require a power source to perform light shielding/light control.

From the viewpoint of sustainable environmental conservation, there is demand for means for performing light shielding/light control without using a power source. Patent Literature 1 proposes a light-shielding material utilizing a change in the temperature of poly(N-isopropylacrylamide) (PNIPAM) dispersed in water.

### Citation List

### Patent Literature

Patent Literature 1: Japanese Patent Laid-Open Publication No. 2021-178887

### Summary of Invention

### Technical Problem

However, the light-shielding material disclosed in Patent Literature 1 uses a temperature-responsive polymer, a nanopolysaccharide having a water retention ability, and water and may further use a near-infrared light absorber. Therefore, production of the light-shielding material requires testing of various raw materials and many processes including polymerization reaction.

It is therefore an object of the present invention to provide a light control glass that can be produced through a simpler process and can offer uniform and stable clouding performance.

### Solution to Problem

In order to achieve the above object, one typical light control glass of the present invention is a light control glass including transparent substrates disposed to face each other and a light control material disposed between the transparent substrates, the light control material being a mixture of a first polymer compound and a second polymer compound, wherein
the first polymer compound is a temperature-responsive polymer compound having a lower critical solution temperature, and
the second polymer compound is a polymer compound that has a sol-gel transition temperature equal to or lower than the lower critical solution temperature and that reversibly turns into a sol state at a temperature lower than the transition temperature.

### Advantageous Effect of Invention

The present invention makes it possible to provide a light control glass that can be produced through a simpler process and can offer uniform and stable clouding performance.

Problems, configurations, and effects other than those described above will be clarified below in Description of Embodiment.

### Brief Description of Drawings

[FIG. 1] FIG. 1 is a schematic cross-sectional view of a light control glass according to a first embodiment.
[FIG. 2A] FIG. 2A is a graph showing the relationship between temperature and transmittance of a comparative example.
[FIG. 2B] FIG. 2B is a graph showing the relationship between temperature and transmittance of an example.
[FIG. 3A] FIG. 3A includes photographs showing the flowability of a clouded portion of the comparative example.
[FIG. 3B] FIG. 3B includes photographs showing the flowability of a clouded portion of the example.
[FIG. 4A] FIG. 4A is a photograph showing the uniformity of a clouded portion of the comparative example.
[FIG. 4B] FIG. 4B is a photograph showing the uniformity of a clouded portion of the example.
[FIG. 5A] FIG. 5A is a photograph showing the effect of FTO-coated glass (before heating).
[FIG. 5B] FIG. 5B is a photograph showing the effect of FTO-coated glass (after heating).
[FIG. 6] FIG. 6 is a diagram showing experimental equipment.
[FIG. 7] FIG. 7 is a graph showing the results of temperature-rise measurement.

### Description of Embodiment

Hereinbelow, an embodiment of the present invention will be described with reference to the drawings. It should be noted that the present invention is not limited by this embodiment. In the description of the drawings, identical parts are given identical reference signs.

It should be noted that in the present disclosure, "surface" may refer not only to a surface of a plate-like member but also to an interface between a surface of a plate-like member and a layer that is contained in the plate-like member and is substantially parallel to the surface of the plate-like member. Further, "upper surface" and "lower surface" mean surfaces shown on the upper side and the lower side in a drawing when a plate-like member or a layer contained in a plate-like member is shown in the drawing. It should be noted that "upper surface" and "lower surface" may be referred to as "first surface" and "second surface".

Further, "side surface" means a portion corresponding to the thickness of a surface of a plate-like member or the thickness of a layer contained in a plate-like member. Further, part of a surface and a side surface may collectively be called "end portion".

Further, "upper side" means a vertically upward direction when a plate-like member or a layer is horizontally placed. Further, "upper side" and "lower side" opposite to it may be referred to as "Z-axis plus direction" and "Z-axis minus direction", and a horizontal direction may be referred to as "X-axis direction" or "Y-axis direction".

Further, "planar shape" or "planar view" means the shape of a surface or a layer when viewed from the upper side. Further, "cross-sectional shape" or "cross-sectional view" means the shape of a plate-shape member or a layer cut along a specific direction when viewed in a horizontal direction.

Further, "central portion" means a central portion that is not a peripheral portion of a surface or a layer. Further, "central direction" means a direction from a peripheral portion of a surface or a layer toward a center in the planar shape of the surface or the layer.

Further, in the present disclosure, "sol state", "gel state", and "sol-gel transition temperature" are defined as follows. For the definition, please refer to a document (Polymer Journal, 18(5), 411-416 (1986)).

One milliliter of a polymer solution (a polymer solution containing a second polymer compound described below) is poured into a test tube having an inner diameter of 1 cm, and the test tube is placed in a water bath at a predetermined temperature (constant temperature) for 12 hours. Then, the test tube is turned upside down. In a case where a solution/air interface (meniscus) deforms under the self-weight of the solution (including a case where the solution flows out), the polymer solution is defined as being in a "sol state" at the predetermined temperature. On the other hand, in a case where the solution/air interface (meniscus) does not deform under the self-weight of the solution even when the test tube is turned upside down, the solution is defined as being in a "gel state" at the predetermined temperature.

In a case where the above-described "predetermined temperature" is gradually (e.g., in increments of 1°C) increased to determine a temperature at which transition from "sol state" to "gel state" occurs, the thus determined transition temperature is defined as a "sol-gel transition temperature". It should be noted that at this time, a temperature at which transition from "gel state" to "sol state" occurs may be determined by, for example, decreasing the "predetermined temperature" in decrements of 1°C.

Examples of the second polymer compound having a hydrophobic moiety and a hydrophilic moiety used in the present disclosure include, but are not limited to: a polyalkylene oxide block copolymer typified by a polypropylene oxide-polyethylene oxide block copolymer or the like; etherified cellulose such as methyl cellulose or hydroxypropyl cellulose; a chitosan derivative (K. R. Holme, et al., Macromolecules, 24, 3828 (1991)); a modified polysaccharide such as a pullulan derivative (Shigeru Deguchi, et al., Polymer Preprints, Japan, 19, 936 (1990)); and a conjugate of a thermosensitive polymer typified by a poly N-substituted (meth)acrylamide derivative, partially acetylated polyvinyl alcohol, polyvinyl methyl ether, or the like and a watersoluble compound (e.g., Takehisa Matsuda, et al., Polymer Preprints, Japan, 39(8), 2559 (1990)).

### [First Embodiment]

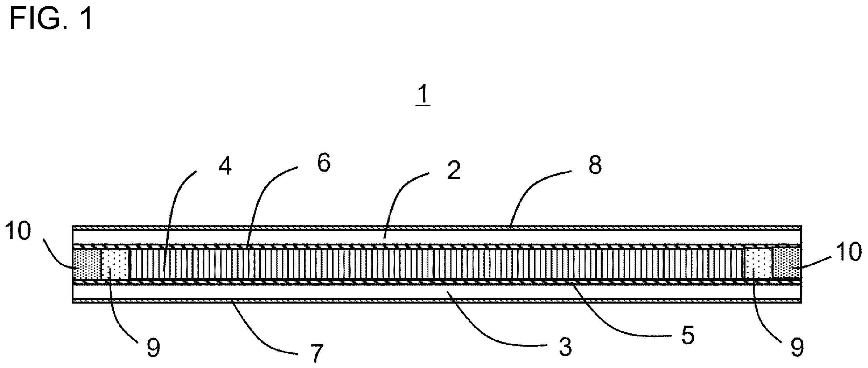

First, an outline of a light control glass according to a first embodiment of the present disclosure will be described with reference to FIG. 1. FIG. 1 is a schematic cross-sectional view of the light control glass according to the first embodiment.

### <Outline of light control glass>

A light control glass 1 according to the first embodiment includes two transparent substrates 2, 3 disposed to face each other and a light control material 4 disposed between them. Further, transparent thermally conductive films 5, 6 are provided on the surfaces of the two transparent substrates 2, 3 being in contact with the light control material 4.

Further, anti-scattering/ultraviolet blocking films 7, 8 are provided on the surfaces of the two transparent substrates 2, 3 opposite to the surfaces being in contact with the light control material 4.

Further, for the purpose of holding the light control material 4 between the transparent substrates 2, 3, the light control glass 1 includes a spacer 9 disposed near its end portion along the planar shape of the transparent substrates 2, 3. Further, a sealant 10 is disposed outside the spacer.

The material of the transparent substrates 2, 3 is not limited as long as it is a translucent material having strength enough to hold the light control material 4, and the transparent substrates 2, 3 may be glass plates or acrylic plates.

The light control material 4 is a material of a mixture of a first polymer compound and a second polymer compound, and they will be described later.

The material of the transparent thermally conductive films 5, 6 is not limited as long as it has the function of promoting thermal conduction in the surfaces of the light control glass and maintaining the temperature in the surfaces uniform, and may be FTO (fluorine-doped tin oxide) or indium-tin composite oxide (ITO).

Further, the anti-scattering/ultraviolet blocking films 7, 8 may be commercially-available polyester films. Also, the spacer 9 and the sealant 10 may be commercially-available members appropriately selected.

### <First polymer compound>

The first polymer compound is a material called a temperature-responsive material or a thermosensitive light shielding material, and may be a temperature-responsive polymer composed of a poly(meth)acrylamide derivative or a poly(meth)acrylamide copolymer of two or more monomers including at least a (meth)acrylamide monomer.

Such a material has a property that when dispersed in water, it exhibits hydrophilicity and dissolves in water at a temperature lower than its lower critical solution temperature (LCST) at which clouding starts so that a transparent solution is formed, but it exhibits hydrophobicity and does not dissolve in water at a temperature equal to or higher than LCST. As such a material, N-isopropylacrylamide (NIPAM) or poly(N-isopropylacrylamide) (PNIPAM) obtained by polymerizing it is conventionally well known, and various temperature-responsive materials based on it are commercially available.

The LCST in aqueous solution is usually about 32°C, but can be adjusted by combining NIPAM with various monomers. The concentration of PNIPAM can appropriately be selected to fall within the range of 0.05 to 30 wt%.

The first polymer compound used in the present disclosure may be any one of these commercially-available materials.

It should be noted that other examples of the poly(meth)acrylamide derivative include poly N-substituted (meth)acrylamide derivatives. Examples of the N-substituted (meth)acrylamides include polymers obtained by polymerizing N-cyclopropyl (meth)acrylamide, N-ethyl (meth)acrylamide, N-isopropyl (meth)acrylamide, N-n-propyl (meth)acrylamide, N-methyl-N-ethylacrylamide, N-methyl-N-isopropylacrylamide, N-methyl-N-n-propylacrylamide, N,N-diethylacrylamide, N-acryloylpiperidine, N-acryloylpyrrolidine, N-tetrahydrofurylacrylamide, or the like. Also, the poly(meth)acrylamide derivative may be a poly(meth)acrylamide copolymer obtained by copolymerization of two or more (meth)acrylamide monomers or copolymerization of a (meth)acrylamide monomer and another monomer.

### <Second polymer compound>

The second polymer compound is not limited as long as it has a sol-gel transition temperature equal to or lower than the lower critical solution temperature of the first polymer compound.

In order to have such a function, the second polymer compound used in the present disclosure has a hydrophobic moiety and a hydrophilic moiety in its molecule. The hydrophilic moiety of the second polymer compound has a function to allow the second polymer compound to be soluble in water at a temperature lower than the sol-gel transition temperature. The hydrophobic moiety has a function to allow the second polymer compound to turn into a gel state at a temperature higher than the sol-gel transition temperature.

Such a second polymer compound has a sol-gel transition temperature in the range of 20 to 45°C.

The second polymer compound used in the present disclosure utilizes the properties described below of a bond between the hydrophobic moieties, that is, a hydrophobic bond in the second polymer compound.

The hydrophobic bond has a property that its binding force increases as the temperature rises, and therefore the strength of cross-linking and a cross-linking density increase as the temperature rises, which allows the second polymer compound to turn into a gel state at a temperature higher than the sol-gel transition temperature in the present disclosure. Further, a property that the temperature dependency of the hydrophobic binding force is reversible allows reversible sol-gel transition of the second polymer compound used in the present disclosure.

On the other hand, the hydrophilic moiety in the second polymer compound is necessary to allow the second polymer compound to turn into a sol state at a temperature lower than the sol-gel transition temperature. Further, the hydrophilic moiety is necessary for forming a gel while preventing the second polymer compound from coagulating due to an excessive increase in hydrophobic binding force at a temperature higher than the sol-gel transition temperature.

The second polymer compound used in the present disclosure can be prepared also by cross-linking the second polymer compound having a hydrophobic moiety and a hydrophilic moiety with a cross-linking agent.

The sol-gel transition temperature of the second polymer compound used in the present disclosure can be adjusted by, for example, changing the composition of each of the hydrophobic moiety and the hydrophilic moiety in the second polymer compound and the degree of hydrophobicity or hydrophilicity and/or the molecular weight of the second polymer compound. Alternatively, the sol-gel transition temperature of the second polymer compound may appropriately be adjusted by adjusting the cross-linking degree of the second polymer compound. There is no limitation on the adjustment of sol-gel transition temperature of the second polymer compound used in the present disclosure, but it is preferred that the sol-gel transition temperature of the second polymer compound is appropriately adjusted to 0°C to 60°C.

The concentration of the second polymer compound in a composition used in the present disclosure depends on, for example, a sol-gel transition temperature to be set, but is 0.1 to 30 mass%, preferably 1 to 20 mass% of the toral mass of the composition.

The second polymer compound used in the present disclosure is composed of a polymer compound [Thermoreversible Gelation Polymer (TGP)] having a sol-gel transition temperature and reversibly turns into a liquid state (sol state) at a temperature lower than the sol-gel transition temperature.

### <Light control material>

The light control material used in the first embodiment is a material obtained by dissolving, in water, 1 wt% of PNIPAM as a first polymer compound and 10 wt% of TGP as a second polymer material.

The light control material used in the first embodiment of the present disclosure is prepared in such a manner that the sol-gel transition temperature of TGP as a second polymer material is set to be lower than the lower critical solution temperature (LCST) of the first polymer material.

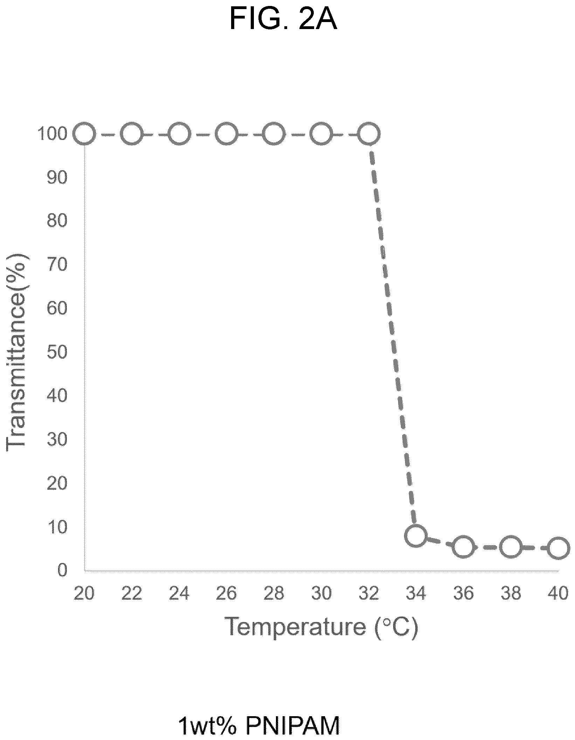

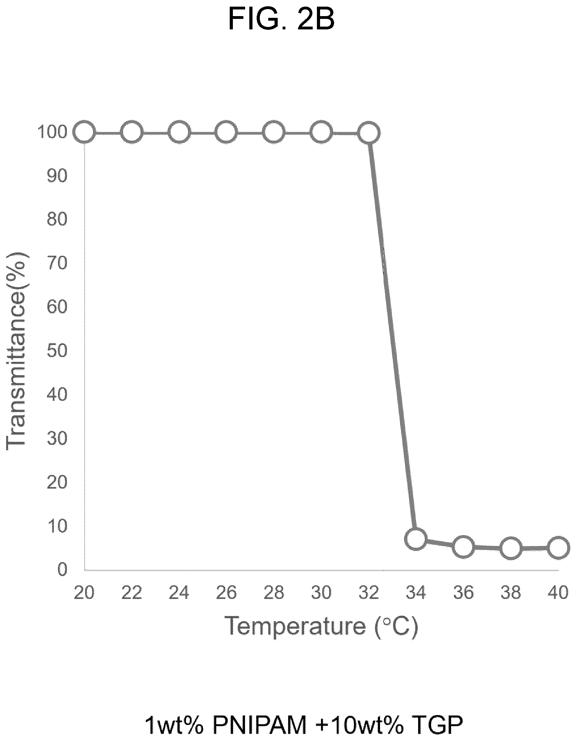

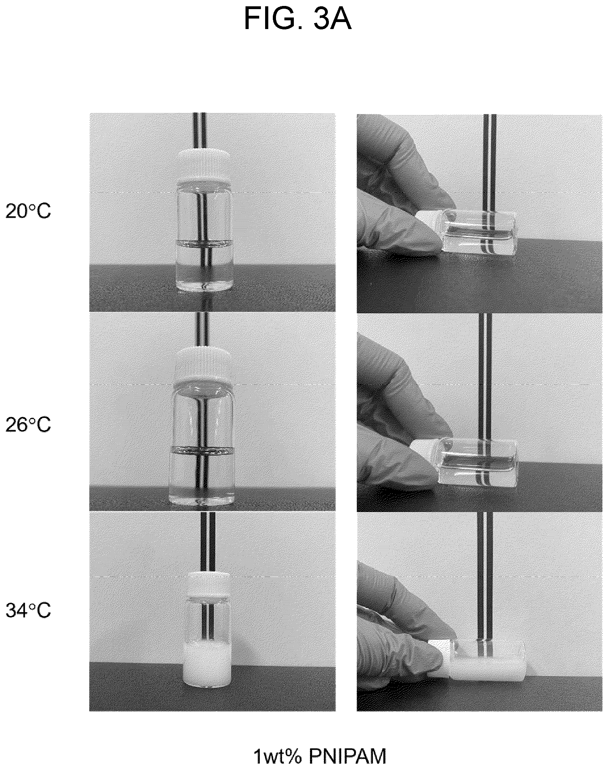

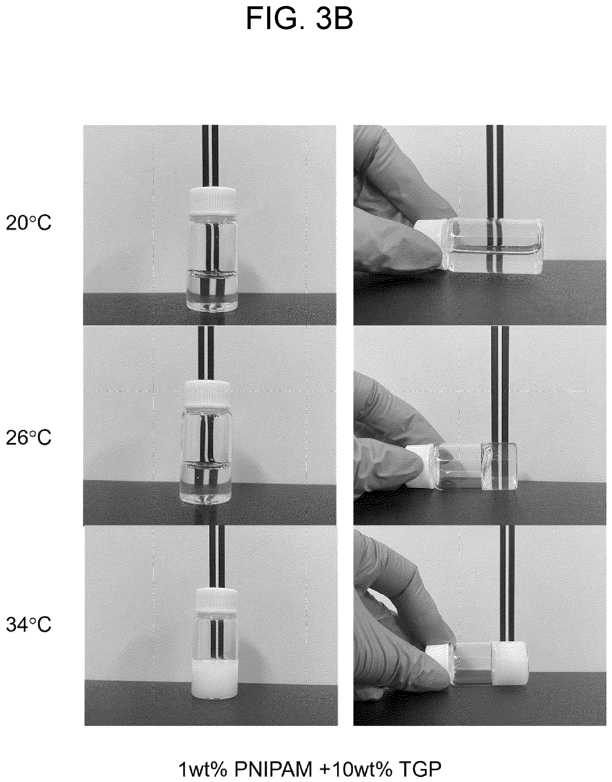

The characteristics and effects of a mixture of TGP and PNIPAM in the present disclosure will be described with reference to FIG. 2A, FIG. 2B, FIG. 3A, and FIG. 3B.

A case where a light control material is formed using 1 wt% of PNIPAM only is herein referred to as a comparative example, and the lower critical solution temperature (LCST) of PNIPAM is set to 32°C. On the other hand, a case where a light control material is formed by adding 10 wt% of TGP in addition to 1 wt% of PNIPAM is referred to as an example, and the lower critical solution temperature (LCST) of PANIPAM is set to 32°C and the sol-gel transition temperature is set to 25°C.

### <Effects of adding TGP>

FIG. 2A is a graph showing the relationship between temperature and transmittance of the comparative example. FIG. 2B is a graph showing the relationship between temperature and transmittance of the example.

As can be seen from the results shown in FIG. 2A and FIG. 2B, there is no difference in the degree of clouding and temperature characteristics between the case where TGP is added to PNIPAM and the case where TGP is not added.

FIG. 3A shows photographs when small containers containing the light control material of the comparative example maintained at 20°C, 26°C, or 34°C are vertically or horizontally placed. FIG. 3B shows photographs when containers containing the light control material of the example are vertically or horizontally placed under the same temperature conditions as in FIG. 3A.

As for the degree of clouding of the light control material of the example, it is clear that in both the comparative example and the example, clouding occurs only when the temperature of the light control material is 34°C. On the other hand, it is clear that the light control material of the example is already in a gel state at 26°C without having flowability. However, it is clear that even after turned into a gel, the light control material of the example becomes clouded as in the case of the comparative example, and in addition, the clouded light control material is kept firm without having flowability.

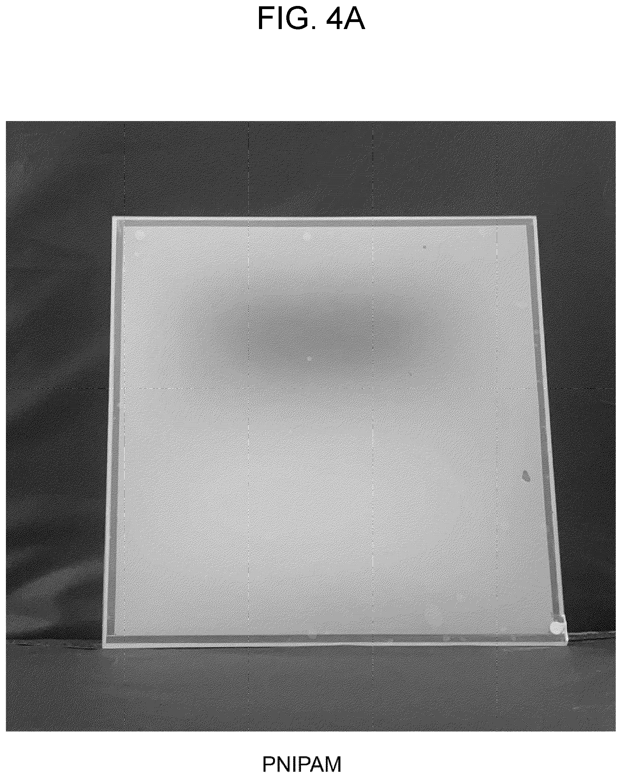

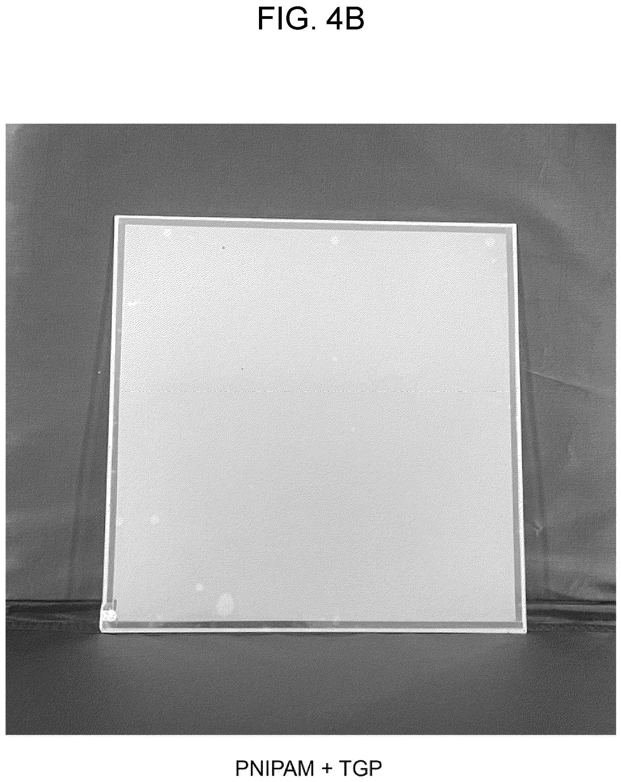

Hereinbelow, the uniformity of clouding of the comparative example and the example will be described with reference to FIG. 4A and FIG. 4B. Light control glasses used for experiment shown in both FIG. 4A and FIG. 4B each have a length of 30 cm, a width of 30 cm, and a glass thickness of 1 mm, and a distance between glass substrates of 400 µm. As shown in FIG. 4A, when the light control glass formed using the light control material of the comparative example is vertically placed, PNIPAM falls downward due to gravity and for other reasons so that an area low in the degree of clouding is generated on the upper side of the light control glass due to a reduction in the density of PNIPAM.

On the other hand, as can be seen from FIG. 4B, in the light control glass using the light control material of the example, the degree of clouding is kept uniform because the light control material is turned into a gel before clouding of PANIPAM.

### <Effect of providing thermally conductive film>

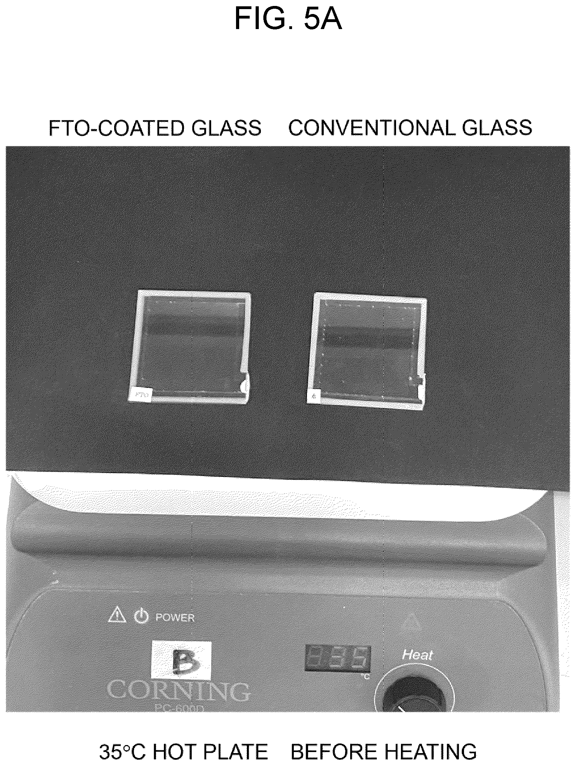

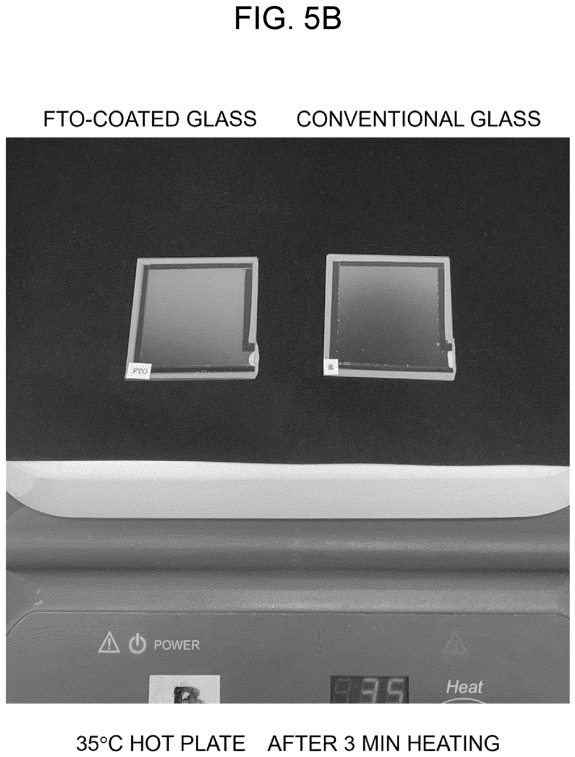

Hereinbelow, the effect of providing thermally conductive films on transparent substrates will be described with reference to FIG. 5A and FIG. 5B.

Light control glasses used for experiment shown in both FIG. 5A and FIG. 5B each have a length of 5 cm, a width of 5 cm, a glass thickness of 1 mm, and a distance between glass substrates of 600 µm. In both FIG. 5A and FIG. 5B, the light control glass shown on the left side is formed using FTO-coated glass substrates obtained by coating glass substrates with FTO as a thermally conductive film on the side that comes into contact with the light control material, and the light control glass shown on the right side is formed using conventional glass substrates not coated with FTO.

FIG. 5B shows a situation where the two types of light control glasses of a comparative example and an example are heated for 3 minutes on a hot plate at 35°C. It is clear that in the light control glass shown on the left side using FTO-coated glass, clouding proceeds more uniformly as compared to the light control glass shown on the right side using conventional glass because temperature transfer is made uniform by FTO provided as a thermally conductive film.

### <Temperature rise-inhibiting effect>

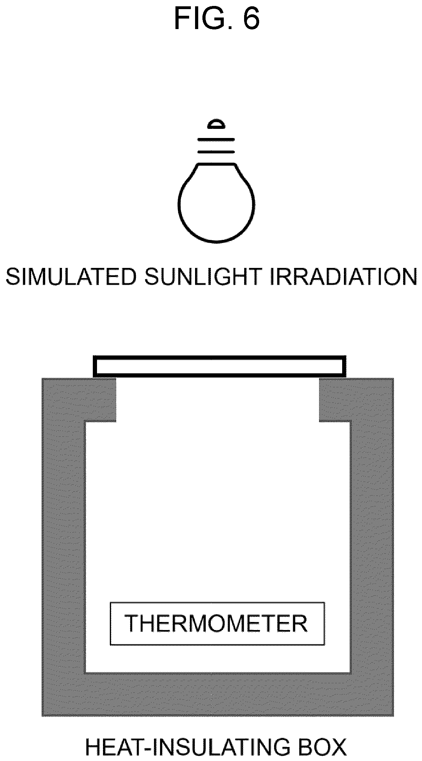

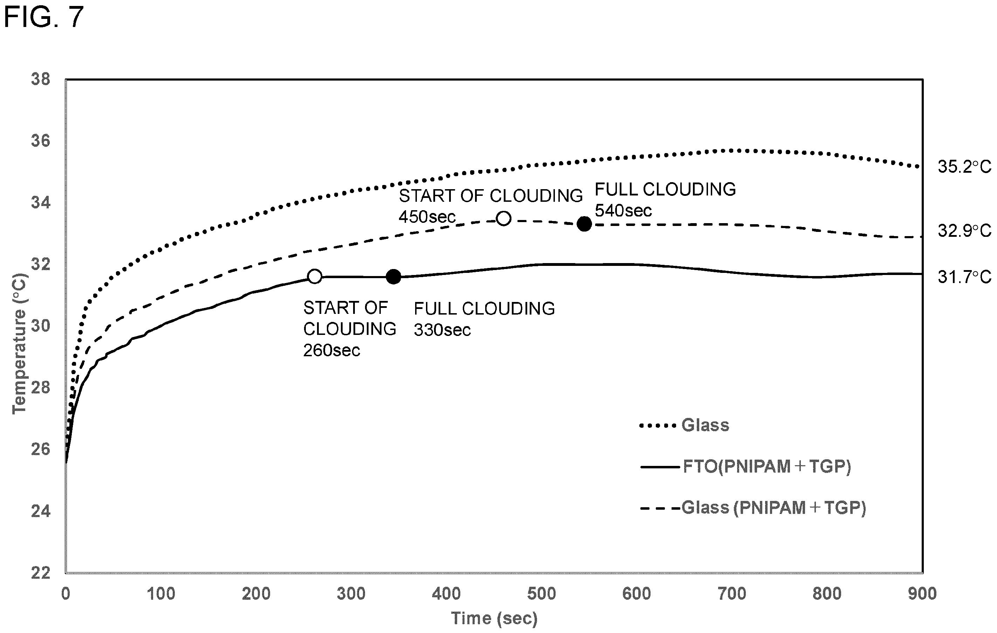

Hereinbelow, the heat-shielding effect of the light control material of the example will be described with reference to FIG. 6 and FIG. 7.

FIG. 6 is a diagram showing experimental equipment for measuring the temperature rise-inhibiting effect of a light control glass. The equipment is configured to be able to measure the temperature in a heat-insulating box whose length, width, and height are all 12 cm when a light control glass with a length of 5 cm and a width of 5 cm placed on the heat-insulating box is irradiated with simulated sunlight from the upper side.

FIG. 7 is a graph showing how the temperature in the heat-insulating box rises and how the light control glass becomes clouded when three samples, i.e., a conventional glass substrate, a light control glass formed by sandwiching the light control material of the example between conventional glass substrates, and a light control glass formed by sandwiching the light control material of the example between FTO-coated glass substrates, are subjected to an experiment using the experimental equipment shown in FIG. 6. The vertical axis represents the temperature in the heat-shielding box and the horizontal axis represents elapsed time.

As can be seen from the graph shown in FIG. 7, the light control glass using FTO-coated glass most effectively prevents temperature rise and quickly becomes clouded. Further, it is clear that the light control glass using FTO-coated glass can significantly prevent a rise in the temperature in the heat-shielding box as compared to the conventional glass substrate.

Although the embodiment of the present invention has been described above, the present invention is not limited to the embodiment described above, and various changes may be made without departing from the gist of the present invention.

The anti-scattering/ultraviolet blocking film is not an essential component and may optionally be attached. Further, it goes without saying that the spacer and the sealant may integrally be configured and may be replaced with other members.

The light control glass of the present disclosure may also be used as a light-shielding glass. Further, the light control glass of the present disclosure can be installed not only as outer walls and interior parts of architectural structures but also in various places where temperature changes may occur, such as railway vehicles, automobiles, aircrafts, and ships.

The light control glass of the present disclosure can control/shield light without using a power source and therefore can be installed even in a place where a power source is not available and a place where it is difficult to install a power source.

The invention of the present disclosure further includes the following aspects.

### (Aspect 1)

A light control glass including transparent substrates disposed to face each other and a light control material disposed between the transparent substrates, the light control material being a mixture of a first polymer compound and a second polymer compound, wherein
the first polymer compound is a temperature-responsive polymer compound having a lower critical solution temperature, and
the second polymer compound is a polymer compound that has a sol-gel transition temperature equal to or lower than the lower critical solution temperature and that reversibly turns into a sol state at a temperature lower than the transition temperature.

### (Aspect 2)

The light control glass according to aspect 1, wherein
the first polymer compound is a poly(meth)acrylamide derivative or a poly(meth)acrylamide copolymer of two or more monomers including at least a (meth)acrylamide monomer.

### (Aspect 3)

The light control glass according to aspect 1 or 2, wherein
the second polymer compound is a thermoreversible gelation polymer (TGP).

### (Aspect 4)

The light control glass according to any one of aspects 1 to 3, wherein
a transparent thermally conductive film is disposed on at least one of surfaces of the transparent substrates disposed to face each other, the surfaces being in contact with the light control material.

### (Aspect 5)

The light control glass according to aspect 4, wherein
the transparent thermally conductive film is made of FTO (fluorine-doped tin oxide) or indium-tin composite oxide (ITO).

### Reference Signs List

1 Light control glass
2, 3 Transparent substrates
4 Light control material
5, 6 Transparent thermally conductive films
7, 8 Anti-scattering/ultraviolet blocking films
9 Spacer
10 Sealant

## Claims

1. A light control glass comprising transparent substrates disposed to face each other and a light control material disposed between the transparent substrates, the light control material being a mixture of a first polymer compound and a second polymer compound, wherein
the first polymer compound is a temperature-responsive polymer compound having a lower critical solution temperature, and
the second polymer compound is a polymer compound that has a sol-gel transition temperature equal to or lower than the lower critical solution temperature and that reversibly turns into a sol state at a temperature lower than the transition temperature.

2. The light control glass according to claim 1, wherein
the first polymer compound is a poly(meth)acrylamide derivative or a poly(meth)acrylamide copolymer of two or more monomers including at least a (meth)acrylamide monomer.

3. The light control glass according to claim 1 or 2, wherein
the second polymer compound is a thermoreversible gelation polymer (TGP).

4. The light control glass according to claim 1 or 2, wherein
a transparent thermally conductive film is disposed on at least one of surfaces of the transparent substrates disposed to face each other, the surfaces being in contact with the light control material.

5. The light control glass according to claim 4, wherein
the transparent thermally conductive film is made of FTO (fluorine-doped tin oxide) or indium-tin composite oxide (ITO).
